# EUROPEAN PATENT SPECIFICATION

(11) **EP 2 485 197 B1**
(45) Date of publication and mention of the grant of the patent: **11.09.2013**
(21) Application number: 11153148.9
(22) Date of filing: 03.02.2011
(51) Int. Cl.: G07F 15/00, G07F 7/02

(54) **Key device and key receptacle assembly for meter**
Anordnung mit einer Schlüsselvorrichtung und einem Schlüsselbehälter für einen Zähler
Ensemble pour compteur comprenant une clé et un réceptacle de clé

(43) Date of publication of application: 08.08.2012
(73) Proprietor: Itron Metering Solutions UK Ltd, Felixstowe, Suffolk IP11 2ER (GB)
(72) Inventor: Bond, William H., Felixstowe, Suffolk IP11 9HG (GB); Dickerson, Adrian, Felixstowe, Suffolk IP11 2UJ (GB); Ausseur, Frédéric, 60560 Orry la Ville (FR)
(74) Representative: Howson, Richard G.B.

(56) References cited:
- EP-A2- 0 253 499

## Description

The invention relates to meters of the type comprising a key receptacle, such as prepayment utility meters used at consumer's house for measuring energy delivered by a utility such as water, gas, heat or electricity utility, and for which the consumer has paid in advance.

Prepayment meters need to be supplied with an appropriate token ahead of the delivery of the service in order that a particular quantity or value of service may be delivered to the consumer. In such systems, a consumer purchases a prepaid credit token typically in the form of a numeric or alphanumeric string with a credit value encoded in it for the relevant service. The token is inputted into the prepayment meter which thus obtains a credit for an appropriate quantity of energy. The prepayment meter typically terminates the supply of the service once that quantity or value of service has been delivered. This allows the customer to manage their household budget more effectively and avoid possible debt. Once the credit has been used, further credit must be purchased and added to the meter to prevent the supply valve (gas or water) or interrupter (electricity) from being closed.

In some countries, e.g. in South Africa, tokens correspond to a code which can be input via a suitable keyboard on the meter. In other countries such as in the United Kingdom, tokens are in the form of a key device or a smart card loaded with credit. The credit is subsequently transferred to the meter by insertion of the card or key into a reader slot or receptacle in the meter which is adapted for the purpose.

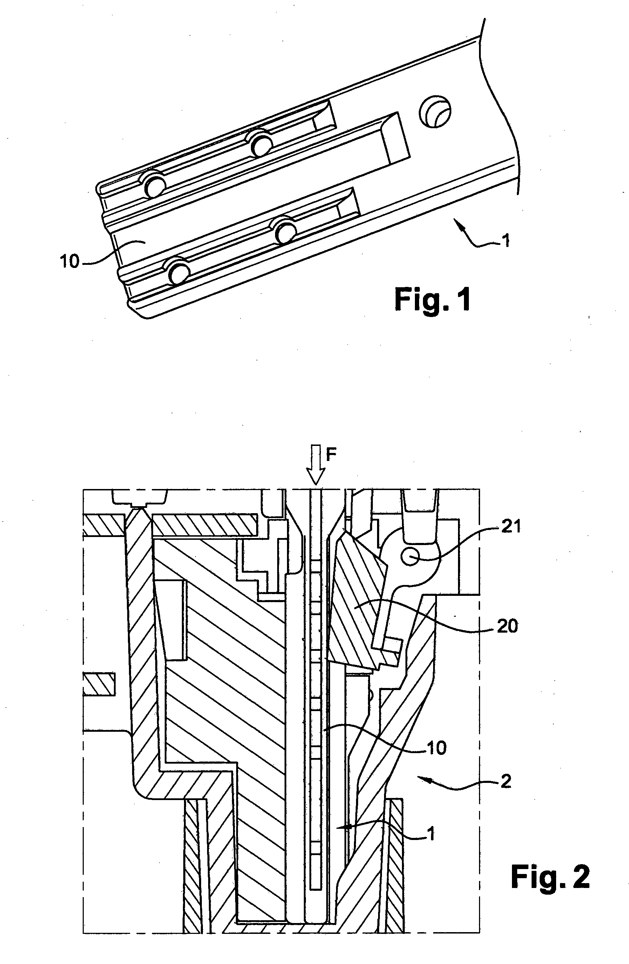

Figure 1 is a partial perspective view of a known key device 1 while figure 2 shows a cross sectional view of a key receptacle 2 accessible from the outside of a meter housing with the known key device 1 of figure 1 inserted.

Key receptacle comprises an opening through which key device 1 can be inserted parallel to an insertion direction F up to an operational position of key device 1 where electrical contacts (not shown) on said key device mate with corresponding electrical contacts (not shown) of key receptacle.

As shown in figure 2, key receptacle 2 also comprises a spring-loaded shutter 20 adapted to rotate around a rotation axis 21 orthogonal to insertion direction F. The purpose of shutter 20 is to close off receptacle opening when no key is inserted in the receptacle. Electrical contacts within receptacle are thus prevented from being contaminated by dust. To this end, shutter 20 can rotate between a closing position where shutter 20 closes said opening when key device 1 is not inserted and an opening position upon insertion of said key device 1. Spring loading is set so that closing position can be automatically reached when no key is inserted or upon removal of the key. Upon insertion of the key device, the free end of the key device meets the shutter and makes it rotate around axis 21 against the action of the spring, until it reaches its opening position where the key device is free to reach its operational position.

In this known assembly, each time a consumer has to reload the meter, he has first to re charge credit on the corresponding key device. The key device can then be inserted into the key receptacle up to its operational position where the credit can be read and stored within a memory of the meter. The key device can then be withdrawn from the key receptacle. Such removal is easy to perform because the back of the customer key device is flat, as shown by reference 10 in figure 1. Hence, the key device may be withdrawn when required, without any effort, by simply pulling out the key device in a direction opposite to the insertion direction F.

Key receptacles are traditionally manufactured as standard modules which can be inserted in or removed from the meter. Accordingly, the same meter can be used with or without the prepayment functionality, i.e. with or without the module, which provides a great advantage for meter manufacturers from a marketing standpoint.

It could be a further great advantage to make these key receptacles useful for purposes other than for accepting from time to time prepayment key devices.

Document EP 0 253 499 discloses a key device and key receptacle assembly for a meter, said key receptacle comprising an opening through which said key device can be inserted parallel to an insertion direction up to an operational position of said key device, said key receptacle comprising a spring-loaded shutter adapted to rotate around a rotation axis orthogonal to said insertion direction between a closing position where said shutter automatically closes said opening when said key device is not inserted and an opening position upon insertion of said key device. The key device and key assembly of the invention is characterized in that upon insertion of said key device, said spring-loaded shutter engages a recess on said key device for locking said key device in its operational position and said recess comprises a bottom edge shaped to apply pressure on said shutter in case an attempt is made to remove the key device, for a permanent or semi-permanent locking of said key device in said receptacle, the degree of retention being controlled depending on the depth and shape of recess.

For instance, for a permanent locking of the key device in the receptacle, one embodiment has recess comprising a bottom edge shaped to apply pressure on shutter in case an attempt is made to remove the key device.

These and other features of the invention will now be more fully disclosed in the following description with reference to the accompanying drawings, in which:
- Figure 1, already described, is a partial perspective view of a known key device used for recharging credit in prepayment energy utility meters;
- Figure 2, already described above, is a cross sectional view of a key receptacle in which key device of figure 1 is inserted;
- Figure 3 shows a partial perspective view of a new key device according to a possible embodiment of the invention;
- Figure 4 illustrates a cross sectional view of the key device and key receptacle assembly according to the invention.

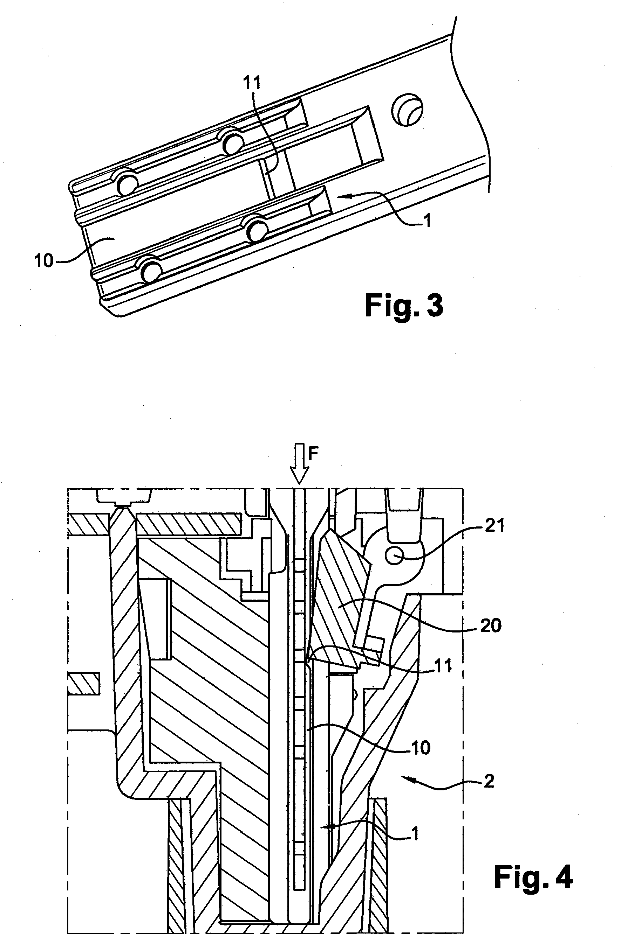

As shown in figures 3 and 4, face 10 of key device 1 which is intended to contact spring-loaded shutter 20 of the key receptacle is provided, according to the invention, with a recess or notch 11.

Upon insertion of key device through the key-way opening of key receptacle 2, spring-loaded shutter 20 automatically engages recess 11 on key device 1, under the spring loading action, thus enabling the locking of key device 1 in its operational position. Figure 4 illustrates the situation where the key device has reached its operational position, and the bottom edge of shutter 20, opposite to the rotation axis 21 has dropped into recess 11 under spring pressure.

By varying the depth and shape of this recess, the degree of retention can be controlled, between just being tight to remove, to being un-able to remove. The modification of the key device is easy to perform since the key device is usually made of plastic. Any shape and depth for the recess can then be achieved by traditional over molding process.

For instance, the bottom edge of recess 11 can be shaped such that if any attempt is made to remove the key device, this edge applies pressure on shutter 20 so as to push it into the recess even harder, thereby preventing the key device from being removed. This pressure is superimposed to the pressure exerted by the spring. The harder the key device is pulled out, the more pressure is exerted to lock it in, thus enabling a permanent locking of the key device inside the receptacle.

In other situations where the key device needs to be removed from time to time, a slight slope for the bottom of the recess can be sufficient for holding the key device and preventing it from easily falling out, while authorizing its removal when needed. A semi-permanent locking can thus be achieved.

Thanks to the invention, it is thus possible to propose the key receptacle module for other purposes than for its classical use with a prepayment key device of a prepayment energy utility meter. Other types of key devices such as communication modules or specific anti fraud devices which would need to be retained within the receptacle either permanently or semi-permanently can be used in combination with the key receptacle.

## Claims

1. A key device and key receptacle assembly for a meter, said key receptacle (2) comprising an opening through which said key device (1) can be inserted parallel to an insertion direction up to an operational position of said key device (1), said key receptacle (2) comprising a spring-loaded shutter (20) adapted to rotate around a rotation axis (21) orthogonal to said insertion direction between a closing position where said shutter (20) automatically closes said opening when said key device (1) is not inserted and an opening position upon insertion of said key device (1), **characterized in that**, upon insertion of said key device, said spring-loaded shutter (20) engages a recess (11) on said key device (1) for locking said key device (1) in its operational position, said recess (11) comprising a bottom edge shaped to apply pressure on said shutter (20) in case an attempt is made to remove the key device, for a permanent or semi-permanent locking of said key device in said receptacle, the degree of retention being controlled depending on the depth and shape of recess (11).

2. The assembly as claimed in claim 1, adapted for use in an energy utility meter.

## Patentansprüche

1. Anordnung mit Schlüsselvorrichtung und Schlüsselbehälter für ein Messgerät, wobei der Schlüsselbehälter (2) eine Öffnung aufweist, durch welche die Schlüsselvorrichtung (1) parallel zu einer Einführrichtung bis zu einer Betriebsposition der Schlüsselvorrichtung (1) eingeführt werden kann, wobei der Schlüsselbehälter (2) eine federbelastete Klappe (20) aufweist, die dazu ausgelegt ist, sich um eine Drehachse (21) orthogonal zur Einführrichtung zwischen einer Schließstellung, in der die Klappe (20) die Öffnung automatisch verschließt, wenn die Schlüsselvorrichtung (1) nicht eingeführt ist, und einer Offenstellung nach Einführung der Schlüsselvorrichtung (1) zu drehen, **dadurch gekennzeichnet, dass** bei Einführen der Schlüsselvorrichtung die federbelastete Klappe (20) in eine Ausnehmung (11) an der Schlüsselvorrichtung (1) eingreift, um die Schlüsselvorrichtung (1) in ihrer Betriebsposition zu Verriegeln, wobei die Ausnehmung (11) eine Unterkante aufweist, die so geformt ist, dass sie Druck auf die Klappe (20) ausübt, wenn versucht wird, die Schlüsselvorrichtung zu entfernen, für eine permanente oder semipermanente Verriegelung oder Schlüsselvorrichtung in dem Behälter, wobei der Haltegrad in Abhängigkeit von der Tiefe und der Form der Ausnehmung (11) gesteuert wird.

2. Anordnung nach Anspruch 1, die zur Verwendung in einem Energie-Verbrauchszähler ausgelegt ist.

## Revendications

1. Ensemble pour compteur comprenant un dispositif de clé et un réceptacle de clé, ledit réceptacle de clé (2) comprenant une ouverture à travers laquelle ledit dispositif de clé (1) peut être inséré parallèlement à une direction d'insertion jusqu'à une position opérationnelle dudit dispositif de clé (1), ledit réceptacle de clé (2) comprenant un obturateur à ressort (20) apte à tourner autour d'un axe de rotation (21) orthogonal à ladite direction d'insertion entre une position de fermeture à laquelle ledit obturateur (20) ferme automatiquement ladite ouverture lorsque ledit dispositif de clé (1) n'est pas inséré et une position d'ouverture à l'insertion dudit dispositif de clé (1), **caractérisé en ce que**, à l'insertion dudit dispositif de clé, ledit obturateur à ressort (20) se met en prise avec un évidement (11) sur ledit dispositif de clé (1) pour verrouiller ledit dispositif de clé (1) à sa position opérationnelle, ledit évidement (11) comprenant un bord inférieur façonné pour appliquer une pression sur ledit obturateur (20) en cas de tentative d'enlèvement du dispositif de clé, pour un verrouillage permanent ou semi-permanent dudit dispositif de clé dans ledit réceptacle, le degré de rétention étant commandé en fonction de la profondeur et de la forme de l'évidement (11).

2. Ensemble selon la revendication 1, apte à être utilisé dans un compteur d'énergie.
